Europäisches Patentamt

European Patent Office

Office européen des brevets

(19)

(11) Veröffentlichungsnummer : **0 427 817 B1**

(12)                    **EUROPÄISCHE PATENTSCHRIFT**

(45) Veröffentlichungstag der Patentschrift :
**12.01.94 Patentblatt 94/02**

(51) Int. Cl.$^5$ : **C01F 5/16,** C01F 5/10,
C01F 5/14, C08K 3/22

(21) Anmeldenummer : **90906047.7**

(22) Anmeldetag : **02.05.90**

(86) Internationale Anmeldenummer :
**PCT/AT90/00043**

(87) Internationale Veröffentlichungsnummer :
**WO 90/13516 15.11.90 Gazette 90/26**

(54) **FEINPULVERIGES MAGNESIUMHYDROXID UND VERFAHREN ZU DESSEN HERSTELLUNG.**

(30) Priorität : **05.05.89 AT 1073/89**

(43) Veröffentlichungstag der Anmeldung :
**22.05.91 Patentblatt 91/21**

(45) Bekanntmachung des Hinweises auf die
Patenterteilung :
**12.01.94 Patentblatt 94/02**

(84) Benannte Vertragsstaaten :
**AT BE CH DE DK ES FR GB IT LI LU NL SE**

(56) Entgegenhaltungen :
**EP-A- 297 088**
**AT-A- 356 630**
**DE-A- 3 323 050**
**CHEMICAL ABSTRACTS; vol. 96, no. 14, April
1982, Columbus, Ohio, USA, B.A. Shoikhet et
al: "Magnesium oxide", Seite 137; ref. no.
106605 Y, siehe Zusammenfassung &
SU-A-880982**

(56) Entgegenhaltungen :
**CHEMICAL ABSTRACTS, vol. 68, no. 4, Januar
1968, Columbus, Ohio, USA, M. Syrovatka et
al.: "Manufacturing magnesium oxide suspension for use as an insulator", Seite 1417;
ref. no. 14571 C, siehe Zusammenfassung &
CS-A-122192**

(73) Patentinhaber : **Veitsch-Radex
Aktiengesellschaft für feuerfeste Erzeugnisse
Mommsengasse 35
A-1040 Wien (AT)**

(72) Erfinder : **MEIER, Andreas
Magnesitstrasse 4
A-8700 Leoben (Steiermark) (AT)**
Erfinder : **GRILL, Michael
Magnesitstrasse 6
A-8700 Leoben (Steiermark) (AT)**

(74) Vertreter : **Pawloy, Heinrich, Dr. et al
Patentanwälte Sonn, Pawloy, Weinzinger &
Wolfram Riemergasse 14
A-1010 Wien (AT)**

**Beschreibung**

Die Erfindung bezieht sich auf ein feinpulveriges Magnesiumhydroxid, welches insbesondere als flammhemmender Füllstoff für Kunststoffcompounds vorgesehen ist, und bei dem die Teilchen gegebenenfalls mit einem dünnen Überzug einer oberflächenaktiven Substanz versehen sind.

Feinpulveriges Magnesiumhydroxid wird häufig als flammhemmender mender Füllstoff für Kunststoffcompounds, und zwar insbesondere für Kunststoffcompounds auf Basis von Thermoplasten, eingesetzt. Es werden dabei den Kunststoffen verhältnismäßig große Mengen an Magnesiumhydroxid zugegeben, wobei die Masse des Magnesiumhydroxids häufig zwischen der Hälfte und dem doppelten der Masse des Kunststoffes liegt. Es haben nun feinpulverige Magnesiumhydroxidsorten oft Eigenschaften, welche einen negativen Einfluß auf die mechanischen Eigenschaften von Kunststoffcompounds, denen solches Magnesiumhydroxid als Füllstoff zugesetzt ist, ausüben. Man kann dabei oft an solchen Kunststoffcompounds bzw. an Gegenständen, die aus solchen Kunststoffcompounds hergestellt sind, z.B. eine Neigung zu verhältnismäßig großer Wasseraufnahme, eine Verminderung der Zugfestigkeit und erhöhte Alterungsneigung feststellen.

Es wird auch oft die Fließfähigkeit und Formbarkeit solcher Kunststoffcompunds und das Aussehen der Oberfläche der aus solchen Kunststoffcompounds hergestellten Gegenstände durch die Eigenschaften bestimmter feinpulveriger Magnesiumhydroxidsorten, z.B. durch deren Körnungsaufbau und deren Gehalt an Wasser, nachteilig beeinflußt.

Die DE-C3-2624065 beschreibt ein Magnesiumhydroxid, bei dem eine spezielle Struktur der Teilchen vorliegt, welche beim Einsatz dieses Magnesiumhydroxids in Kunststoffcompounds Nachteile vorgenannter Art ausschalten soll. Die Teilchen sollen dabei eine Deformation in der <101>-Richtung von nicht mehr als $3 \times 10^{-3}$, eine Kristallitgröße in der <101>-Richtung von mehr als 800 Å und eine spezifische Oberfläche, bestimmt nach BET, von weniger als 20 m$^2$/g haben. Nach der DE-C3-2659933 ist zur Ausschaltung der Nachteile vorgenannter Art zusätzlich zu dieser Struktur der Teilchen des Magnesiumhydroxids noch ergänzend vorgesehen, daß diese Teilchen mit anionischen oberflächenaktiven Stoffen überzogen sind.

Es hat sich aber nun gezeigt, daß die vorgenannten Strukturparameter nicht geeignet sind zur Kennzeichnung eines für den eingangs genannten Zweck zu verwendenden Magnesiumhydroxids, mit dem die genannten Nachteile zuverlässig auszuschalten sind. Es kann in der Praxis trotz des Vorliegens einer solchen Struktur zum Auftreten der genannten Nachteile kommen.

Es ist ein Ziel der vorliegenden Erfindung, ein feinpulveriges Magnesiumhydroxid eingangs erwähnter Art zu schaffen, welches beim Einsatz als flammhemmender Füllstoff in Kunststoffcompounds die vorerwähnten Nachteile sicher ausschaltet und auch nach längerer Zeit keine Beeinträchtigung der chemisch-physikalischen Eigenschaften, insbesondere der elektrischen Isolierfähigkeit und der chemischen Beständigkeit, und auch keine Beeinträchtigung der mechanischen Eigenschaften und der Maßhaltigkeit hervorruft bzw. nachteilige Veränderungen der Kunststoffcompounds unter der Einwirkung von Feuchtigkeit und anderen Umgebungseinflüssen nicht begünstigt, Das zu schaffende feinpulverige Magnesiumhydroxid soll weiter auch ein einfaches Verarbeiten von Kunststoffcompounds, in denen es als flammhemmender Füllstoff vorgesehen ist, ermöglichen und gute Festigkeitseigenschaften der aus solchen Kunststoffcompounds hergestellten Gegenstände, sowie eine gleichmäßige geschlossene Oberfläche an diesen Gegenständen, welche keine Störung durch Oberflächenfehler aufweist, erzielen lassen.

Das erfindungsgemäße feinpulverige Magnesiumhydroxid eingangs erwähnter Art ist dadurch gekennzeichnet, daß die Korngröße des Magnesiumhydroxids, mit Laserbeugung gemessen, unter 10 µm liegt und hiebei der Medianwert der Korngröße größer als 0,8 µm und höchstens 3 µm ist, daß der Gehalt des Magnesiumhydroxids an wasserlöslichen ionischen Verunreinigungen, nämlich $Ca^{++}$, $Na^+$, $K^+$, $SO_4^{--}$, $Cl^-$ unter den nachstehend genannten Grenzen (in Masseteilen) liegt:

$Ca^{++}$ < 1000 ppm, $Na^+$ < 20 ppm, $K^+$ < 20 ppm,

$SO_4^{--}$ < 1500 ppm, $Cl^-$ < 1000 ppm, und daß der Gehalt des Magnesiumhydroxids an Mn, Cu und Ni, unter den Grenzen (in Masseteilen)

MnO < 100 ppm, NiO < 100 ppm, CuO < 10 ppm

liegt.

Durch diese Ausbildung kann der vorstehend angeführten Zielsetzung gut entsprochen werden.

Es konnte bei Untersuchungen, welche im Rahmen der Schaffung des Erfindungsgegenstandes vorgenommen worden sind, festgestellt werden, daß durch Einhalten der genannten Werte an wasserlöslichen ionischen Verunreinigungen des Magnesiumhydroxids der Isolationswiderstand und die elektrische Durchschlagsfestigkeit von Körpern bzw. Gegenständen, welche aus einem mit einem solchen Magnesiumhydroxid gefüllten Kunststoffcompound bestehen, deutlich höher sind, als beim Einsatz anderer, bisher gebräuchlicher Sorten von Magnesiumhydroxid, wobei dies besonders dann in Erscheinung tritt, wenn derartige Körper bzw. Gegenstände der Einwirkung von Feuchtigkeit ausgesetzt sind. Darüberhinaus wird durch das Einhalten der genannten Werte an wasserlöslichen ionischen Verunreinigungen des Magnesiumhydroxids ein unter Feuchtigkeitseinfluß auftretendes Aufquellen der Kunststoffcompounds, welches beim Einsatz bisher gebräuchlicher Magnesiumhydroxidsorten oft beobachtet werden konnte, wirksam verhindert und es werden mit dem erfindungsgemäßen Magnesiumhydroxid sehr gute mechanische Eigenschaften (z.B. hinsichtlich Festigkeit, Reißdehnung und Formstabilität) der aus den Kunststoffcompounds gefertigten Gegenstände und auch eine gute Beständigkeit derselben gegen Alterungserscheinungen erzielt. Es trägt hiezu auch das Einhalten der für die Schwermetallverunreinigungen angegebenen Werte bei, was dahingehend erklärbar erscheint, daß dieses Einhalten eine chemisch nachteilige Beeinflussung des Kunststoffes (z.B. oxidativer Abbau) praktisch ausschaltet. Auch das Einhalten des genannten Höchstwertes der Korngröße trägt zum Erzielen guter mechanischer Eigenschaften und zum weitgehenden Vermeiden nachteiliger Wirkungen von Fremdeinflüssen, insbesondere Feuchtigkeit, bei, indem es eine hohe Oberflächengüte der aus den Kunststoffcompounds hergestellten Körper bzw. Gegenstände erzielen läßt, d.h. eine dichte und geschlossene Oberfläche, die dem Eindringen von Fremdstoffen entgegenwirkt. Desgleichen ist die genannte Korngröße für das Erzielen einer guten Zugfestigkeit vorteilhaft. Auch das Einhalten des genannten Bereiches für den Medianwert ("$d_{50}$" genannt) der Korngröße des Magnesiumhydroxids ist zum Erzielen günstiger mechanischer Eigenschaften der Kunststoffcompounds und weiter auch hinsichtlich der flammhemmenden Wirkung vorteilhaft. Es ist dabei darauf hinzuweisen, daß die Korngrößenangaben auf einer Korngrößenmessung mit Laserbeugung basieren: eine Korngrößenmessung mit anderen Meßmethoden kann andere Meßwerte ergeben. Bei einer Messung mit Laserbeugung wird ein Überkornanteil von bis zu 1 % (Masse) nicht erfaßt.

Es erscheint als besonderer Vorteil, daß Körper bzw. Gegenstände, welche aus Kunststoffcompounds hergestellt sind, die als Füllstoff das erfindungsgemäße Magnesiumhydroxid enthalten, verschiedene günstige mechanische Eigenschaften in Kombination miteinander zeigen. So können zum Beispiel bei elastomeren Kunststoffcompounds sehr gute Werte der Zugfestigkeit und gleichzeitig gute Werte der Reißdehnung erzielt werden.

Eine bevorzugte Ausbildung des erfindungsgemäßen feinpulverigen Magnesiumhydroxids sieht, um eine besonders gute Beständigkeit gegen Feuchtigkeitseinflüsse zu erzielen, vor, daß der Gehalt an $Ca^{++}$, $Na^+$, $K^+$, $SO_4^{--}$, $Cl^-$ unter den Grenzen

$Ca^{++} < 500$ ppm, $Na^+ < 10$ ppm, $K^+ < 10$ ppm,

$SO_4^{--} < 800$ ppm, $Cl^- < 500$ ppm,

liegt.

Hinsichtlich des Gehaltes des Magnesiumhydroxids an Schwermetallen sieht eine bevorzugte Ausführungsform vor, daß der Gehalt an Mn, Cu und Ni unter den Grenzen $MnO < 50$ ppm, $NiO < 50$ ppm, $CuO < 5$ ppm liegt. Es kann auf diese Weise eine katalytische Begünstigung von Abbauerscheinungen des Kunststoffes praktisch völlig ausgeschaltet werden.

Es ist hinsichtlich der flammhemmenden Wirkung des feinpulverigen Magnesiumhydroxids weiter vorteilhaft, wenn man vorsieht, daß der Glühverlust des Magnesiumhydroxids > 30,0 % ist.

Die elektrische Leitfähigkeit des Magnesiumhydroxids, bestimmt nach DIN 53208 an einer wässerigen Suspension, ist vorteilhaft < 500 µS/cm, vorzugsweise < 300 µS/cm.

Es hat sich hinsichtlich der Erzielung günstiger mechanischer Eigenschaften der Kunststoffcompounds bzw. der daraus hergestellten Gegenstände und auch hinsichtlich der flammhemmenden Wirkung des Magnesiumhydroxids ein Höchstwert der Korngröße von 7 µm sowie ein Medianwert der Korngröße von 1 ± 0,2 µm als besonders vorteilhaft erwiesen.

Hinsichtlich der Verarbeitung des Magnesiumhydroxids mit dem Kunststoff zu einem Kunststoffcompound bzw. hinsichtlich des Dispergierens des Magnesiumhydroxids in Kunststoff und auch hinsichtlich einer Beeinflussung des E-Moduls der mit Magnesiumhydroxid gefüllten Kunststoffcompounds ist es vorteilhaft, wenn das "Aspect ratio" genannte Verhältnis des Durchmessers der Primärteilchen des Magnesiumhydroxids zur Höhe dieser Primärteilchen zwischen 2 und 6 liegt. Ein Verhältnis des Durchmessers dieser Primärteilchen zu deren Höhe, welches zwischen 3 und 4 liegt, ist dabei besonders günstig für die Dispergierbarkeit.

Das gegebenenfalls vorgesehene Vorsehen eines dünnen Überzugs einer oberflächenaktiven Substanz auf den Teilchen des Magnesiumhydroxids ist vor allem hinsichtlich einer weiteren Verbesserung der Dispergierbarkeit und einer weiteren Verbesserung der mechanischen Eigenschaften der Kunststoffcompounds von Vorteil. Man kann dabei mit verhältnismäßig geringen Mengen bis etwa 2 %, bezogen auf die Masse des Magnesiumhydroxids, das Auslangen finden.

Die Erfindung bezieht sich auch auf ein Verfahren zur Herstellung des feinpulverigen Magnesiumhydroxids und es ist dieses Verfahren dadurch gekennzeichnet, daß durch Sprührösten aus einer zuvor von Fremdstoffen gereinigten Magnesiumchloridlösung gewonnenes Magnesiumoxid, bei dem der Gehalt an $Ca^{++}$, $Na^+$, $K^+$, $SO_4^{--}$, $Cl^-$ unter den Grenzen (in Masseteilen):

$Ca^{++} < 10\ 000$ ppm, $Na^+ < 1000$ ppm, $K^+ < 1000$ ppm,

$SO_4^{--}$ < 3000 ppm, $Cl^-$ < 100 000 ppm,

und bei dem der Gehalt an Mn, Cu und Ni, unter den Grenzen (in Masseteilen): MnO < 150 ppm, NiO < 150 ppm, CuO < 15 ppm liegt, mit Wasser versetzt wird, daß die Suspension unter Rühren reagieren gelassen wird, daß danach das in der Suspension entstandene Magnesiumhydroxid abfiltriert wird und das Filterkuchenmaterial einer ein- oder mehrmaligen Nachwäsche mit vollentsalztem Wasser unterworfen wird, daß das Filterkuchenmaterial danach neuerlich entwässert und daraufhin getrocknet wird. Für die Hydratisierung des Magnesiumoxids wird vorzugsweise vollentsalztes Wasser verwendet.

Vorteilhaft wird beim erfindungsgemäßen Verfahren die Suspension bei einer Temperatur zwischen 55°C und 100°C unter Rühren reagieren gelassen. Hinsichtlich eines raschen und vollständigen Ablaufes der Hydratation und hinsichtlich der Erzielung der für das erfindungsgemäße Magnesiumhydroxid wesentlichen Kennwerte ist es dabei günstig, wenn die Suspension bei einer Temperatur zwischen 80 und 90°C unter Rühren reagieren gelassen wird.

Es ist im Rahmen des erfindungsgemäße Verfahrens auf besonders einfache Weise möglich, die speziellen Eigenschaften bzw. Merkmale, die beim erfindungsgemäßen feinpulverigen Magnesiumhydroxid vorliegen, zu erzielen, wenn man vorsieht, daß die Magnesiumchloridlösung ihrerseits durch Aufschluß eines Magnesiumsilikatmaterials oder Magnesiumhydrosilikatmaterials, wie Olivin, Serpentin, Garnierit oder dgl., mit Salzsäure und nachfolgende Reinigung der Aufschlußtrübe hergestellt wird.

Die Gewinnung des Magnesiumoxids erfolgt beim erfindungsgemäßen Verfahren durch Sprührösten einer Magnesiumchloridlösung. Bei dieser Technik wird eine Magnesiumchloridlösung in einem Reaktor versprüht, in welchem eine von Brennern erzeugte Heißgasatmosphäre vorliegt. Es findet dabei eine praktisch vollständige Pyrohydrolyse des Magnesiumchlorids statt, während andere Bestandteile der Magnesiumchloridlösung, z.B. wasserlösliche K-, N-, oder Ca-Salze, nicht verändert werden.

Es kann erwähnt werden, daß auch vom vorgenannten Sprührösten abweichende Verfahren zur Herstellung von Magnesiumhydroxid und Magnesiumoxid in großem Umfang angewendet werden. So wird zur Gewinnung von Magnesiumhydroxid und Magnesiumoxid aus Meerwasser das Meerwasser mit Kalkmilch oder Dolomitmilch versetzt, wobei es zur Ausfällung von Magnesiumhydroxid kommt, welches durch Sedimentation abgetrennt wird und anschließend gewaschen wird, wonach das dabei entstandene Magnesiumhydroxid durch thermische Behandlung in Magnesiumoxid übergeführt werden kann. Diese Herstellung von Magnesiumhydroxid und Magnesiumoxid ist mannigfachen nachteiligen Einflüssen durch Fremdstoffe, die sich im Meerwasser und in der Kalkmilch bzw. Dolomitmilch befinden und die auch im Endprodukt nachteilig in Erscheinung treten können, ausgesetzt.

Weiterhin bezieht sich die Erfindung auf die Verwendung des erfindungsgemäßen feinpulverigen Magnesiumhydroxids als flammhemmender Füllstoff in Kunststoffcompounds. Eine bevorzugte Verwendung des erfindungsgemäßen feinpulverigen Magnesiumhydroxids ist dadurch gekennzeichnet, daß das Magnesiumhydroxid als flammhemmender Füllstoff in Kunststoffcompounds, deren Kunststoffkomponente ein Thermoplast ist, eingesetzt wird.

Schließlich bezieht sich die Erfindung auf ein Kunststoffcompound, das einen Kunststoff und als flammhemmenden Füllstoff ein erfindungsgemäßes Magnesiumhydroxid enthält. Ein bevorzugtes Kunststoffcompound ist dadurch gekennzeichnet, daß das Compound als Kunststoffkomponente einen Thermoplast und als flammhemmenden Füllstoff ein erfindungsgemäßes Magnesiumhydroxid enthält

Die Erfindung wird nun unter Bezugnahme auf Beispiele weiter erläutert:

Beispiel 1: In einem Reaktionsgefäß werden 10 l vollentsalztes Wasser vorgelegt und auf eine Temperatur von 70°C gebracht. 850 g eines Magnesiumoxids mit der in Tabelle I, Spalte 1, angeführten chemischen Analyse und Korngrößenanalyse, hergestellt durch Pyrohydrolyse einer Magnesiumchloridlösung, werden in die vorgelegte Losung eingebracht und ausreichend mittels eines Rührers während 3 h gerührt. Nach der hydrothermischen Behandlung wird das Produkt filtriert und mit Wasser gewaschen. Nach Trocknung wird ein Produkt erhalten, dessen chemische Analyse und Korngrößenanalyse in Tabelle II, Spalte 1, angeführt ist. Die elektrische Leitfähigkeit des auf diese Weise hergestellten Magnesiumhydroxids wurde gemäß DIN 53208 an einer wässerigen Suspension zu 265 µS/cm bestimmt. Die Primärteilchen weisen ein Durchmesser/Höhenverhältnis von 3 bis 4 auf.

Beispiel 2: 10 l vollentsalztes Wasser werden in einem Reaktionsgefäß vorgelegt und auf 85°C erwärmt. 2 kg eines Magnesiumoxids mit der in Tabelle I, Spalte 2, angegebenen chemischen Analyse und Korngrößenanalyse, das durch Pyrohydrolyse einer Magnesiumchloridlösung hergestellt wurde, werden in die Lösung eingerührt und während 5 h einer hydrothermischen Behandlung ausgesetzt. Das Produkt wird anschließend bei 85°C filtriert und mit Wasser gewaschen. Nach Trocknung wird ein Produkt erhalten, dessen chemische Analyse und Korngrößenverteilung in Tabelle II, Spalte 2, zusammengefaßt ist. Die elektrische Leitfähigkeit, bestimmt nach DIN 53208 an einer wässerigen Suspension, betrug 382 µS/cm. Die Primärteilchen zeigten ein Durchmesser/Höhenverhältnis von 5 bis 6.

Beispiel 3: 1500 g eines gemäß Beispiel 1 hergestellten Magnesiumhydroxids wurden mit 15 g eines Alkoxysilans in einem Schnellmischer 15 min intensiv gemischt und auf diese Weise oberflächenmodifiziert.

Beispiel 4: Es wurden zur Bildung eines Kunststoffcompounds 100 Masseteile eines elastomeren Äthylen-Propylen-Dien-Polymerisates (EPDM), welches in Form eines Pulvers vorlag, mit 220 Masseteilen eines nach Beispiel 1 erhaltenen Magnesiumhydroxids innig vermischt und es wurden danach aus diesem Kunststoffcompound durch Spritzgießen Probekörper hergestellt und es wurden diese Probekörper nach DIN 53670 untersucht. Die Ergebnisse dieser Untersuchung sind in Spalte A der Tabelle III angeführt.

Beispiel 5: Es wurde nach Beispiel 4 vorgegangen, wobei das gleiche Polymerisat aber ein nach Beispiel 3 erhaltenes Magnesiumhydroxid verwendet wurde. Die Ergebnisse der Untersuchung der aus dem Kunststoffcompound hergestellten Probekörper sind in Spalte B der Tabelle III angeführt.

Vergleichsbeispiel 1: Es wurde nach Beispiel 4 vorgegangen, wobei das gleiche Polymerisat aber ein handelsübliches aus Meerwasser hergestelltes Magnesiumhydroxid verwendet wurde. Die Ergebnisse der Untersuchung der aus dem Kunststoffcompound hergestellten Probekörper sind in Spalte C der Tabelle III angeführt.

Vergleichsbeispiel 2: Es wurde nach Beispiel 4 vorgegangen, wobei das gleiche Polymerisat aber ein oberflächenmodifiziertes Magnesiumhydroxid, wie es in der DE-C3-2 659 933 beschrieben ist, verwendet wurde. Die Ergebnisse der Untersuchung der aus dem Kunststoffcompound hergestellten Probekörper sind in Spalte D der Tabelle III angeführt.

Es ist aus Tabelle III unmittelbar ersichtlich, daß die Prüfkörper, welche aus Kunststoffcompounds hergestellt sind, die als Füllstoff erfindungsgemäßes Magnesiumhydroxid enthalten (Spalten A und B) eine hohe Zugfestigkeit und gleichzeitig auch einen guten Wert der Reißdehnung und auch eine geringe Quellung bei Wasserlagerung zeigen.

Bei Probekörpern, welche aus Kunststoffcompounds hergestellt wurden, die als Füllstoff ein handelsübliches, aus Meerwasser hergestelltes Magnesiumhydroxid enthalten (Tabelle III, Spalte C) ergibt sich eine gegenüber den Werten der Spalten A und B der Tabelle 3 deutlich geringere Zugfestigkeit und eine erhöhte Quellung bei Wasserlagerung. Der Einsatz eines anderen bekannten Magnesiumhydroxids, welches oberflächenmodifiziert ist (Vergleichsbeispiel 2 - Tabelle III, Spalte D) führt zu einer geringeren Quellung, setzt aber auch die Zugfestigkeit stark herab.

Beispiel 6: Es wurden zur Bildung eines Kunststoffcompounds 100 Masseteile eines Polypropylens vom Typ PP 8400 (Fa. HülsChemie) mit 150 Masseteilen eines nach Beispiel 1 erhaltenen Magnesiumhydroxids innig vermischt und es wurden danach aus diesem Kunststoffcompound durch Spritzgießen Probekörper hergestellt und es wurden diese Probekörper auf Zugfestigkeit und Reißdehnung nach DIN 53455, auf Schlagzähigkeit nach DIN 53453, auf Brenneigenschaften nach ASTM D 2863-77 und auf Flammhemmung nach UL 94/V (3 mm) untersucht; weiter wurde nach einer internen Vergleichsmethode die Fließlänge des Kunststoffcompounds beim Spritzguß bei 240°C als Maß für die Verarbeitbarkeit bestimmt. Die dabei erhaltenen Meßwerte sind in Tabelle IV, Spalte A, angeführt. Hinsichtlich der Brenneigenschaften wurde der LOI Wert (Limiting Oxygen Index) bestimmt, der dem Mindest-Sauerstoffanteil (% $O_2$) der Umgebungsatmosphäre entspricht, der zur Aufrechterhaltung des Abbrandes erforderlich ist. UL 94/V (3 mm) sind Richtlinien des Underwriters Laboratory zur Durchführung von Untersuchungen auf Flammhemmung an Prüfkörpern von 3 mm Stärke in vertikaler Lage; hiebei bezeichnet V-O .. bestes Ergebnis, V-1 .. mittleres Ergeb-nis, H.B. .. high burning (abgebrannt).

Beispiel 7: Es wurde nach Beispiel 6 vorgegangen, wobei das gleiche Polypropylen wie in Beispiel 6, aber ein nach Beispiel 3 erhaltenes Magnesiumhydroxid, verwendet wurde. Die Ergebnisse der Untersuchung der aus diesem Kunststoffcompound durch Spritzgießen hergestellten Probekörper sind in Spalte B der Tabelle IV angeführt.

Vergleichsbeispiel 3 : Es wurde nach Beispiel 6 vorgegangen, wobei das gleiche Polypropylen wie in Beispiel 6, aber ein handelsübliches, aus Meerwasser hergestelltes Magnesiumhydroxid, wie es in Vergleichsbeispiel 1 verwendet worden war, eingesetzt wurde. Die Ergebnisse der Untersuchung der aus diesem Kunststoffcompound durch Spritzgießen hergestellten Probekörper sind in Spalte C der Tabelle IV angeführt.

Vergleichsbeispiel 4: Es wurde nach Beispiel 6 vorgegangen, wobei das gleiche Polypropylen wie in Beispiel 6, aber ein oberflächenmodifiziertes Magnesiumhydroxid, wie es in Vergleichsbeispiel 2 verwendet worden war, eingesetzt wurde. Die Ergebnisse der Untersuchung der aus diesem Kunststoffcompound durch Spritzgießen hergestellten Probekörper sind in Spalte D der Tabelle IV angeführt.

Vergleichsbeispiel 5: Es wurden aus dem in den Beispielen 6 und 7 sowie in den Vergleichsbeispielen 3 und 4 verwendeten Polypropylen ohne Zugabe von Magnesiumhydroxid durch Spritzgießen Probekörper hergestellt und den bei diesen Beispielen und Vergleichsbeispielen erfolgten Untersuchungen unterworfen. Dabei wurden die in Spalte E der Tabelle IV angeführten Ergebnisse erhalten.

T A B E L L E   I

Magnesiumoxid

| Chemische Analyse | | 1 | 2 |
|---|---|---|---|
| MgO (aus der Differenz) | %-Masse | 98,2 | 94,1 |
| SiO$_2$ | " | 0,005 | 0,02 |
| CaO | " | 0,50 | 0,52 |
| Al$_2$O$_3$ | " | 0,010 | 0,002 |
| Fe$_2$O$_3$ | " | 0,007 | 0,004 |
| MnO | " | 0,0005 | 0,003 |
| NiO | " | 0,003 | 0,002 |
| Na$_2$O | " | 0,02 | 0,018 |
| K$_2$O | " | 0,02 | 0,012 |
| SO$_4^{--}$ | " | 0,04 | 0,065 |
| Cl$^-$ | " | 1,2 | 5,28 |
| spez. Oberfläche BET | m$^2$/g | 5,0 | 4,7 |
| Körnungsanalyse: | | | |
| Medianwert d$_{50}$ | /um | 2,43 | 2,68 |
| Kornobergrenze | /um | 24,6 | 24,6 |

T A B E L L E   II

Magnesiumhydroxid

| Chemische Analyse | | 1 | 2 |
|---|---|---|---|
| Glühverlust bei 1000°C/ 2 Stunden | %-Masse | 30,5 | 30,52 |
| $SiO_2$ | " | 0,012 | 0,021 |
| $Fe_2O_3$ | " | 0,005 | 0,002 |
| $Al_2O_3$ | " | 0,003 | 0,002 |
| CaO | " | 0,006 | 0,001 |
| $Mg(OH)_2$ (aus der Differenz) | " | 99,9 | 99,9 |
| $Na_2O$ | " | <0,001 | <0,001 |
| $K_2O$ | " | <0,001 | <0,001 |
| $SO_4^{--}$ | " | 0,028 | 0,017 |
| $Cl^-$ | " | 0,014 | 0,082 |
| CuO | ppm | < 5 | < 5 |
| MnO | " | 4 | 20 |
| NiO | " | 20 | 14 |
| spez. Oberfläche BET | $m^2/g$ | 11 | 14,5 |
| Körnungsanalyse: | | | |
| Medianwert $d_{50}$ | /um | 1,19 | 1,41 |
| Kornobergrenze | /um | 6,0 | 5,0 |

T A B E L L E   III

Untersuchungen an Prüfkörpern

| Art der Prüfung \ Kunststoffcompound | A | B | C | D |
|---|---|---|---|---|
| Härte nach Shore A DIN 53505 | 85 | 86 | 81 | 79,5 |
| Zugfestigkeit/Nmm$^{-2}$ DIN 53504 | | | | |
| Original | 7,0 | 10,0 | 4,4 | 2,8 |
| 7 Tage 135$^{\circ}$C [1] | 10,2 | 12,8 | 6,3 | 2,8 |
| 28 Tage Wasserlagerung 50$^{\circ}$C [2] | 6,6 | 7,8 | 4,0 | 3,1 |
| Reißdehnung/% DIN 53504 | | | | |
| Original | 224 | 185 | 212 | 534 |
| 7 Tage 135$^{\circ}$C [1] | 179 | 145 | 178 | 479 |
| 28 Tage Wasserlagerung 50$^{\circ}$C [2] | 247 | 230 | 422 | 464 |
| Quellung bei Wasserlagerung/%[2] | | | | |
| 1. Tag | 0,9 | 0,4 | 1,5 | 0,4 |
| 3. Tag | 1,5 | 0,8 | 3,8 | 0,7 |
| 7. Tag | 2,0 | 1,3 | 8,2 | 0,9 |
| 14. Tag | 2,5 | 1,7 | 9,8 | 1,4 |
| 21. Tag | 2,7 | 1,8 | 10,5 | 1,8 |
| 28. Tag | 2,8 | 2,0 | 11,8 | 1,9 |
| Vulkanisation | | | | |
| Niedrigstes Drehmoment $M_L$ | 10,0 | 9,8 | 5,4 | 2,5 |
| Höchstes Drehmoment $M_H$ | 64,1 | 63,2 | 57,8 | 37,3 |

[1] Die Heißluftalterung wurde in Anlehnung an DIN 53508 durch Lagerung bei 135$^{\circ}$C über 7 Tage durchgeführt.

[2] Die Wasserlagerung wurde in Anlehnung an DIN 53521 durchgeführt, indem die Prüflinge über einen Zeitraum von 28 Tagen bei 50$^{\circ}$C dem Kontaktmedium Wasser ausgesetzt wurden.

T A B E L L E    IV

| Art der Prüfung \ Kunststoffcompound | A | B | C | D | E |
|---|---|---|---|---|---|
| Zugfestigkeit ($N/mm^2$) | 25,0 | 20,8 | 18,2 | 18,0 | 23,0 |
| Reißdehnung (m/m) | 0,035 | 0,34 | 0,026 | 0,22 | > 1 |
| Schlagzähigkeit ($KJ/m^2$) | 10,0 | o.Br. | 3,0 | o.Br. | o.Br. |
| LOI (% $O_2$) | 27,0 | n.b. | n.b. | 23,8 | 17,1 |
| UL 94/V (3 mm) | V-0 | V-0 | V-1 | H.B. | H.B. |
| Fließlänge beim Spritzguß 240°C (cm) | 13,5 | 14,0 | 6,0 | 15,0 | 15,0 |

Schlagzähigkeit      o.Br. = ohne Bruch

LOI      n.b. = nicht bestimmt

**Patentansprüche**

1. Feinpulveriges Magnesiumhydroxid, welches insbesondere als flammhemmender Füllstoff für Kunststoffcompounds vorgesehen ist, und bei dem die Teilchen gegebenenfalls mit einem dünnen Überzug einer oberflächenaktiven Substanz versehen sind, dadurch gekennzeichnet, daß die Korngröße des Magnesiumhydroxids, mit Laserbeugung gemessen, unter 10 μm liegt und hiebei der Medianwert der Korngröße größer als 0,8 μm und höchstens 3 μm ist, daß der Gehalt des Magnesiumhydroxids an wasserlöslichen ionischen Verunreinigungen, nämlich $Ca^{++}$, $Na^+$, $K^+$, $SO_4^{--}$, $Cl^-$ unter den nachstehend genannten Grenzen (in Masseteilen) liegt:

   $Ca^{++}$ < 1000 ppm, $Na^+$ < 20 ppm, $K^+$ < 20 ppm,
   $SO_4^{--}$ < 1500 ppm, $Cl^-$ < 1000 ppm,

   und daß der Gehalt des Magnesiumhydroxids an Mn, Ni und Cu, unter den Grenzen (in Masseteilen)

   MnO < 100 ppm, NiO < 100 ppm, CuO < 10 ppm

   liegt.

2. Feinpulveriges Magnesiumhydroxid nach Anspruch 1, dadurch gekennzeichnet, daß der Gehalt an $Ca^{++}$, $Na^+$, $K^+$, $SO_4^{--}$, $Cl^-$ unter den Grenzen

   $Ca^{++}$ < 500 ppm, $Na^+$ < 10 ppm, $K^+$ < 10 ppm,
   $SO_4^{--}$ < 800 ppm, $Cl^-$ < 500 ppm,

   liegt.

3. Feinpulveriges Magnesiumhydroxid nach Anspruch 1 oder 2, dadurch gekennzeichnet, daß der Gehalt an Mn, Cu, Ni unter den Grenzen MnO < 50 ppm, NiO < 50 ppm, CuO < 5 ppm liegt.

4. Feinpulveriges Magnesiumhydroxid nach einem der Ansprüche 1 bis 3, dadurch gekennzeichnet, daß der Glühverlust des Magnesiumhydroxids > 30,0 % ist.

5. Feinpulveriges Magnesiumhydroxid nach einem der Ansprüche 1 bis 4, dadurch gekennzeichnet, daß die elektrische Leitfähigkeit des Magnesiumhydroxids < 500 µS/cm ist.

6. Feinpulveriges Magnesiumhydroxid nach Anspruch 5, dadurch gekennzeichnet, daß die elektrische Leitfähigkeit des Magnesiumhydroxids < 300 µS/cm ist.

7. Feinpulveriges Magnesiumhydroxid nach einem der Ansprüche 1 bis 6, dadurch gekennzeichnet, daß der Medianwert der Korngröße bei 1 µm ± 0,2 µm liegt.

8. Feinpulveriges Magnesiumhydroxid nach einem der Ansprüche 1 bis 7, dadurch gekennzeichnet, daß die Korngröße des Magnesiumhydroxids unter 7 µm liegt.

9. Feinpulveriges Magnesiumhydroxid nach einem der Ansprüche 1 bis 8, dadurch gekennzeichnet, daß das Verhältnis des Durchmessers der Primärteilchen zu deren Höhe zwischen 2 und 6 liegt.

10. Feinpulveriges Magnesiumhydroxid nach Anspruch 9, dadurch gekennzeichnet, daß das Verhältnis des Durchmesser der Primärteilchen zu deren Höhe zwischen 3 und 4 liegt.

11. Verfahren zur Herstellung eines feinpulverigen Magnesiumhydroxids nach einem der Ansprüche 1 bis 10, dadurch gekennzeichnet, daß durch Sprührösten aus einer zuvor von Fremdstoffen gereinigten Magnesiumchloridlösung gewonnenes Magnesiumoxid, bei dem der Gehalt an $Ca^{++}$, $Na^+$, $K^+$, $SO_4^{--}$, $Cl^-$ unter den Grenzen (in Masseteilen):

$Ca^{++} < 10\,000$ ppm, $Na^+ < 1000$ ppm, $K^+ < 1000$ ppm,

$SO_4^{--} < 3000$ ppm, $Cl^- < 100\,000$ ppm,

und bei dem der Gehalt an Mn, Cu und Ni, unter den Grenzen (in Masseteilen): MnO < 150 ppm, NiO < 150 ppm, CuO < 15 ppm liegt, mit Wasser versetzt wird, daß die Suspension unter Rühren reagieren gelassen wird, daß danach das in der Suspension entstandene Magnesiumhydroxid abfiltriert wird und das Filterkuchenmaterial einer ein- oder mehrmaligen Nachwäsche mit vollentsalztem Wasser unterworfen wird, daß das Filterkuchenmaterial danach neuerlich entwässert und daraufhin getrocknet wird.

12. Verfahren nach Anspruch 11, dadurch gekennzeichnet, daß für die Hydratisierung des Magnesiumoxids vollentsalztes Wasser verwendet wird.

13. Verfahren nach Anspruch 11 oder 12, dadurch gekennzeichnet, daß die Suspension bei einer Temperatur zwischen 55°C und 100°C unter Rühren reagieren gelassen wird.

14. Verfahren nach Anspruch 13, dadurch gekennzeichnet, daß die Suspension bei einer Temperatur zwischen 80 und 90°C unter Rühren reagieren gelassen wird.

15. Verfahren nach einem der Ansprüche 11 bis 14, dadurch gekennzeichnet, daß daß die Magnesiumchloridlösung ihrerseits durch Aufschluß eines Magnesiumsilikatmaterials oder Magnesiumhydrosilikatmaterials, wie Olivin, Serpentin, Garnierit oder dgl., mit Salzsäure und nachfolgende Reinigung der Aufschlußtrübe hergestellt wird.

16. Feinpulveriges Magnesiumhydroxid, dadurch gekennzeichnet, daß das Magnesiumhydroxid nach einem Verfahren gemäß einem oder mehreren der Ansprüche 11 bis 15 hergestellt worden ist.

17. Verwendung eines feinpulverigen Magnesiumhydroxids nach einem oder mehreren der Ansprüche 1 bis 10 und 16, dadurch gekennzeichnet, daß das Magnesiumhydroxid als flammhemmender Füllstoff in Kunststoffcompounds eingesetzt wird.

18. Verwendung eines feinpulverigen Magnesiumhydroxids nach Anspruch 17, dadurch gekennzeichnet, daß das Magnesiumhydroxid als flammhemmender Füllstoff in Kunststoffcompounds, deren Kunststoffkomponente ein Thermoplast ist, eingesetzt wird.

19. Kunststoffcompound, dadurch gekennzeichnet, daß das Compound einen Kunststoff und als flammhemmenden Füllstoff ein Magnesiumhydroxid nach einem oder mehreren der Ansprüche 1 bis 10 und 16 enthält.

20. Kunststoffcompound nach Anspruch 19, dadurch gekennzeichnet, daß das Compound als Kunststoffkomponente einen Thermoplast und als flammhemmenden Füllstoff ein Magnesiumhydroxid nach einem oder mehreren der Ansprüche 1 bis 10 und 16 enthält.

**Claims**

1. A pulverulent magnesium hydroxide provided, in particular, as a flame-retardant filler for plastic compounds, and whose particles optionally are provided with a thin coating of a surfactant, characterized in that the grain size of the magnesium hydroxide, measured by laser diffraction, is below 10 $\mu$m, the median value of the grain size being larger than 0.8 $\mu$m and 3 $\mu$m at most, that the content of the magnesium hydroxide of water-soluble ionic impurities, i.e., $Ca^{++}$, $Na^+$, $K^+$, $SO_4^{--}$, $Cl^-$, is below the following limits (in parts by mass):

    $Ca^{++} < 1000$ ppm, $Na^+ < 20$ ppm, $K^+ < 20$ ppm,

    $SO_4^{--} < 1500$ ppm, $Cl^- < 1000$ ppm,

    and that the content of the magnesium hydroxide of Mn, Ni and Cu is below the limits (in parts by mass):

    $MnO < 100$ ppm, $NiO < 100$ ppm, $CuO < 10$ ppm.

2. A pulverulent magnesium hydroxide according to claim 1, characterized in that the content of $Ca^{++}$, $Na^+$, $K^+$, $SO_4^{--}$, $Cl^-$ is below the limits

    $Ca^{++} < 500$ ppm, $Na^+ < 10$ ppm, $K^+ < 10$ ppm,

    $SO_4^{--} < 800$ ppm, $Cl^- < 500$ ppm.

3. A pulverulent magnesium hydroxide according to claim 1 or 2, characterized in that the content of Mn, Cu, Ni is below the limits

    $MnO < 50$ ppm, $NiO < 50$ ppm, $CuO < 5$.

4. A pulverulent magnesium hydroxide according to any one of claims 1 to 3, characterized in that the loss on ignition of the magnesium hydroxide is > 30.0 %.

5. A pulverulent magnesium hydroxide according to any one of claims 1 to 4, characterized in that the electric conductivity of the magnesium hydroxide is < 500 $\mu$S/cm.

6. A pulverulent magnesium hydroxide according to claim 5, characterized in that the electric conductivity of the magnesium hydroxide is < 300 $\mu$S/cm.

7. A pulverulent magnesium hydroxide according to any one of claims 1 to 6, characterized in that the median value of the grain size is 1 $\mu$m $\pm$ 0.2 $\mu$m.

8. A pulverulent magnesium hydroxide according to any one of claims 1 to 7, characterized in that the grain size of the magnesium hydroxide is below 7 $\mu$m.

9. A pulverulent magnesium hydroxide according to any one of claims 1 to 8, characterized in that the ratio of the diameter of the primary particles to the height of the same ranges between 2 and 6.

10. A pulverulent magnesium hydroxide according to claim 9, characterized in that the ratio of the diameter of the primary particles to the height of the same ranges between 3 and 4.

11. A process for preparing a pulverulent magnesium hydroxide according to any one of claims 1 to 10, characterized in that magnesium oxide obtained by spray roasting from a magnesium chloride solution previously purified from foreign matter, which magnesium oxide has a content of $Ca^{++}$, $Na^+$, $K^+$, $SO_4^{--}$, $Cl^-$ of below the following limits (in parts by mass):

    $Ca^{++} < 10\ 000$ ppm, $Na^+ < 1000$ ppm, $K^+ < 1000$ ppm,

    $SO_4^{--} < 3000$ ppm, $Cl^- < 100\ 000$ ppm,

    and a content of Mn, Cu and Ni of below the limits (in parts by mass): $MnO < 150$ ppm, $NiO < 150$ ppm, $CuO < 15$ ppm,

    is admixed with water, that the suspension is allowed to react under stirring, that the magnesium hydroxide formed in the suspension subsequently is filtered off and the filter cake material is subjected to one or several subsequent washings with completely desalted water, that the filter cake material then is dehydrated again and finally is dried.

12. A process according to claim 11, characterized in that completely desalted water is used for the hydration of magnesium oxide.

13. A process according to claim 11 or 12, characterized in that the suspension is allowed to react under stirring at a temperature ranging between 55°C and 100°C.

14. A process according to claim 13, characterized in that the suspension is allowed to react under stirring at a temperature ranging between 80°C and 90°C.

15. A process according to any one of claims 11 to 14, characterized in that the magnesium chloride solution, in turn, is prepared by decomposition of magnesium silicate material or magnesium hydrosilicate material, such as olivine, serpentine, garnierite or the like, with hydrochloric acid and subsequent purification of the pulp obtained.

16. A pulverulent magnesium hydroxide, characterized in that the magnesium hydroxide has been prepared by the process according to one or several of claims 11 to 15.

17. The use of a pulverulent magnesium hydroxide according to one or several of claims 1 to 10 and 16, characterized in that the magnesium hydroxide is used as a flame-retardant filler in plastic compounds.

18. The use of a pulverulent magnesium hydroxide according to claim 17, characterized in that the magnesium hydroxide is used as a flame-retardant filler in plastic compounds the plastic component of which is a thermoplast.

19. A plastic compound, characterized in that the compound contains a plastic material and a magnesium hydroxide according to one or several of claims 1 to 10 and 16 as said flame-retardant filler.

20. A plastic compound according to claim 19, characterized in that the compound contains a thermoplast as said plastic component and a magnesium hydroxide according to one or several of claims 1 to 10 and 16 as said flame-retardant filler.


**Revendications**

1. Hydroxyde de magnésium pulvérulent, en particulier prévu en tant que charge retardateur de combustion pour des compounds synthétiques et dont les particules, le cas échéant, sont pourvues d'un enduit mince d'un agent tensio-actif, caractérisé en ce que la granulométrie de l'hydroxyde de magnésium, mesurée par diffraction laser, est inférieure à 10 $\mu$m, la valeur médiane granulométrique étant supérieure à 0,8 $\mu$m et au plus 3 $\mu$m, que la teneur en impuretés ioniques solubles dans l'eau, notamment en $Ca^{++}$, $Na^+$, $K^+$, $SO_4^{--}$, $Cl^-$, de l'hydroxyde de magnésium est inférieure aux limites suivantes (exprimées en parts de masse):
   $Ca^{++}$ < 1000 ppm, $Na^+$ < 20 ppm, $K^+$ < 20 ppm,
   $SO_4^{--}$ < 1500 ppm, $Cl^-$ < 1000 ppm,
   et que la teneur en Mn, Ni et Cu de l'hydroxyde de magnésium est inférieure aux limites (en parts de masse):
   MnO < 100 ppm, NiO < 100 ppm, CuO < 10 ppm.

2. Hydroxyde de magnésium pulvérulent selon la revendication 1, caractérisé en ce que la teneur en $Ca^{++}$, $Na^+$, $K^+$, $SO_4^{--}$, $Cl^-$ est inférieure aux limites
   $Ca^{++}$ < 500 ppm, $Na^+$ < 10 ppm, $K^+$ < 10 ppm,
   $SO_4^{--}$ < 800 ppm, $Cl^-$ < 500 ppm.

3. Hydroxyde de magnésium pulvérulent selon la revendication 1 ou 2, caractérisé en ce que la teneur en Mn, Cu, Ni est inférieure aux limites
   MnO < 50 ppm, NiO < 50 ppm, CuO < 5 ppm.

4. Hydroxyde de magnésium pulvérulent selon une des revendications 1 à 3, caractérisé en ce que la perte par calcination de l'hydroxyde de magnésium est > 30,0 %.

5. Hydroxyde de magnésium pulvérulent selon une des revendications 1 à 4, caractérisé en ce que la conductibilité électrique de l'hydroxyde de magnésium est < 500 $\mu$S/cm.

6. Hydroxyde de magnésium pulvérulent selon la revendication 5, caractérisé en ce que la conductibilité électrique de l'hydroxyde de magnésium est < 300 μS/cm.

7. Hydroxyde de magnésium pulvérulent selon une des revendications 1 à 6, caractérisé en ce que la valeur médiane granulométrique est de l'ordre de 1 μm ± 0,2 μm.

8. Hydroxyde de magnésium pulvérulent selon une des revendications 1 à 7, caractérisé en ce que la granulométrie de l'hydroxyde de magnésium est inférieure à 7 μm.

9. Hydroxyde de magnésium pulvérulent selon une des revendications 1 à 8, caractérisé en ce que le rapport entre le diamètre des particules primaires et l'hauteur de celles-ci est entre 2 et 6.

10. Hydroxyde de magnésium pulvérulent selon la revendication 9, caractérisé en ce que le rapport entre le diamètre des particules primaires et l'hauteur de celles-ci est entre 3 et 4.

11. Procédé pour la production de l'hydroxyde de magnésium pulvérulent selon une des revendications 1 à 10, caractérisé en ce que d'hydroxyde de magnésium obtenu par grillage par pulvérisation à partir d'une solution de chlorure de magnésium préalablement purifiée de matières étrangères et dont la teneur en $Ca^{++}$, $Na^+$, $K^+$, $SO_4^{--}$, $Cl^-$ est inférieure aux limites (en parts de masse):
    $Ca^{++}$ < 10 000 ppm, $Na^+$ < 1000 ppm, $K^+$ < 1000 ppm,
    $SO_4^{--}$ < 3000 ppm, $Cl^-$ < 100 000 ppm,
    et la teneur en Mn, Cu et Ni est inférieure aux limites (en parts de masse): MnO < 150 ppm, NiO < 150 ppm, CuO < 15 ppm, est additionné d'eau, que la suspension est faite réagir sous agitation, puis l'hydroxyde de magnésium formé dans la suspension est filtré et la matière du gâteau de filtre-presse est soumise à une ou plusieurs lavages ultérieures avec de l'eau complètement dessalée, qu'ensuite la matière du gâteau de filtre-presse est déshydratée de nouveau, puis et séchée.

12. Procédé selon la revendication 11, caractérisé en ce que de l'eau complètement dessalée est utilisée pour l'hydratation de l'oxyde de magnésium.

13. Procédé selon la revendication 11 ou 12, caractérisé en ce que la suspension est faite réagir sous agitation à une température entre 55°C et 100°C.

14. Procédé selon la revendication 13, caractérisé en ce que la suspension est faite réagir sous agitation à une température entre 80°C et 90°C.

15. Procédé selon une des revendications 11 à 14, caractérisé en ce que la solution de chlorure de magnésium, de son côté, est préparée par décomposition d'une matière de silicate de magnésium ou d'hydrosilicate de magnésium, tel que l'olivine, la serpentine, la garniérite etc., avec de l'acide chlorhydrique, puis purification de la pulpe obtenue.

16. Hydroxyde de magnésium pulvérulent, caractérisé en ce que l'hydroxyde de magnésium est préparé suivant le procédé selon une ou plusieurs des revendications 11 à 15.

17. L'utilisation de l'hydroxyde de magnésium pulvérulent selon une ou plusieurs des revendications 1 à 10 et 16, caractérisée en ce que l'hydroxyde de magnesium est utilisé en tant que charge retardateur de combustion dans des compounds synthétiques.

18. L'utilisation de l'hydroxyde de magnésium pulvérulent selon la revendication 17, caractérisée en ce que l'hydroxyde de magnésium est utilisé en tant que charge retardateur de combustion dans des compounds synthétiques dont la composante synthétique est un thermoplastique.

19. Compound synthétique, caractérisé en ce que le compound contient une matière synthétique et un hydroxyde de magnésium selon une ou plusieurs des revendications 1 à 10 et 16 en tant que charge retardateur de combustion.

20. Compound synthétique selon la revendication 19, caractérisé en ce que le compound contient un thermoplastique en tant que composante synthétique et un hydroxyde de magnésium selon une ou plusieurs des revendications 1 à 10 et 16 en tant que charge retardateur de combustion.